# EUROPÄISCHE PATENTANMELDUNG

(11) **EP 3 309 899 A1**
(43) Veröffentlichungstag der Anmeldung: **18.04.2018**
(21) Anmeldenummer: 17178080.2
(22) Anmeldetag: 27.06.2017
(51) Int. Cl.: H01Q 1/22, H01Q 21/06, H01Q 15/08, H01Q 3/44, H01P 5/107, H01Q 13/02, H01Q 13/06, H01Q 21/08

(54) **RADARANTENNE FÜR EIN FÜLLSTANDMESSGERÄT**

(30) Priorität: 12.10.2016 EP 16193550
(71) Anmelder: VEGA Grieshaber KG, 77709 Wolfach (DE)
(72) Erfinder: WÄLDE, Steffen, 78078 Niedereschach (DE)
(74) Vertreter: Maiwald Patentanwalts GmbH

(57) **Zusammenfassung**

Es wird eine Radarantenne (10) für ein Füllstandmessgerät (100) bereitgestellt, welche wenigstens eine Trägerplatte (14) und wenigstens zwei auf der Trägerplatte (14) angeordnete Antennenelemente (12) zum Senden und/oder Empfangen eines Radarsignals aufweist. Dabei weist jedes der Antenennelemente (12) einen Hohlleiter (16) zum Leiten des Radarsignals auf, wobei ein Innenvolumen (20) jedes Hohlleiters (16) zumindest teilweise mit einem Dielektrikum (22) gefüllt ist. Die Antennenelemente (12) sind in einem Abstand (18) zueinander angeordnet, welcher kleiner oder gleich einer Wellenlänge des Radarsignals ist.

## Beschreibung

### Gebiet der Erfindung

Die Erfindung betrifft das Gebiet der radarbasierten Füllstandmessung. Insbesondere betrifft die Erfindung eine Radarantenne für ein Füllstandmessgerät, ein Füllstandmessgerät mit einer solchen Radarantenne sowie ein Verfahren zur Herstellung einer solchen Radarantenne.

### Hintergrund der Erfindung

Insbesondere zur Erfassung einer Oberflächentopologie einer Füllgutoberfläche von beispielsweise Schüttgütern oder bewegten Flüssigkeiten werden häufig Füllstandmessgeräte mit Radarantennen eingesetzt, welche in der Regel eine Mehrzahl von Antennenelementen zum Senden und/oder Empfangen eines Radarsignals aufweisen.

Zur Bestimmung der Oberflächentopologie kann die Oberfläche des Füllguts beispielsweise mit einem Messstrahl abgetastet werden. Zur Steuerung des Messstrahls kann dabei eine Radarantenne mit einem eindimensionalen Array, auch Zeilenscanner genannt, aus einer Vielzahl von Antennenelementen verwendet werden, wobei das Array eine eindimensionale Abtastung der Füllgutoberfläche basierend auf einer Veränderung der Hauptstrahlrichtung und/oder der Hauptempfangsrichtung erlaubt. Wird dieses Array darüber hinaus um eine Achse rotiert, kann eine zweidimensionale Abtastung der Oberfläche erfolgen.

Auch können Füllstandmessgeräte eine Radarantenne mit einer zweidimensionalen Anordnung von Antennenelementen aufweisen, wobei durch elektronische Strahlablenkung die gesamte Oberfläche des Schüttguts ohne mechanische Bewegung des Füllstandmessgeräts vermessen werden kann.

### Zusammenfassung der Erfindung

Eine Aufgabe der Erfindung kann darin gesehen werden, eine verbesserte und kompakte Radarantenne für ein kompaktes, robustes, zuverlässiges sowie verschleißarmes Füllstandmessgerät bereitzustellen.

Diese Aufgabe wird durch den Gegenstand der unabhängigen Ansprüche gelöst. Weitere Ausführungsformen der Erfindung ergeben sich aus den abhängigen Ansprüchen und der nachfolgenden Beschreibung.

Ein erster Aspekt der Erfindung betrifft eine Radarantenne für ein Füllstandmessgerät. Die erfindungsgemäße Radarantenne kann insbesondere für ein Topologie erfassendes Füllstandmessgerät, ein topologiebestimmendes Füllstandmessgerät und/oder für ein Füllstandmessgerät zur Erfassung einer Topologie einer Oberfläche eines Füllguts, wie etwa ein Schüttgut und/oder ein flüssiges Medium, in vorteilhafter Weise eingesetzt werden. Dabei kann das Füllstandmessgerät dazu eingerichtet sein, nach dem FMCW-Verfahren ("Frequency Modulated Continuous Wave") und/oder nach dem SFCW-Verfahren ("Stepped Frequency Continuous Wave") zu arbeiten. Die Radarantenne weist wenigstens eine Trägerplatte, etwa eine metallische Trägerplatte, und wenigstens zwei auf der Trägerplatte angeordnete Antennenelemente zum Senden und/oder Empfangen eines Radarsignals auf. Jedes der Antenennelemente weist einen Hohlleiter zum Leiten und/oder Fortleiten des Radarsignals auf, wobei ein Innenvolumen jedes Hohlleiters zumindest teilweise, insbesondere vollständig, mit einem Dielektrikum, einem dielektrischen Material und/oder einem dielektrischen Medium gefüllt ist. Die Antennenelemente sind dabei in einem Abstand zueinander angeordnet und/oder in einem Abstand voneinander beabstandet, welcher kleiner oder gleich einer Wellenlänge des Radarsignals ist. Der Abstand zwischen zwei Antennenelementen kann dabei den Abstand zwischen zwei direkt benachbarten Antennenelementen bezeichnen. Der Abstand zweier direkt benachbarter Antennenelemente kann dabei als Abstand zwischen Zentren und/oder zwischen zentralen Mittelachsen der jeweiligen Hohlleiter bemessen sein.

Die Radarantenne kann dabei eine beliebige Anzahl von Antennenelementen aufweisen. Allgemein können die Antennenelemente Sende-Empfangselemente bezeichnen, welche sowohl zum Senden als auch zum Empfangen eines Radarsignals eingerichtet und/oder ausgestaltet sein können. Alternativ kann auch ein Teil der Antennenelenelemente als Sendeelemente zum Senden eines Radarsignals und ein weiterer Teil der Antennenelemente kann als Empfangselemente zum Empfangen eines an der Oberfläche eines Füllguts reflektierten Signals und/oder eines Empfangssignals eingerichtet und/oder ausgestaltet sein.

Durch die erfindungsgemäße Ausgestaltung der Radarantenne sowie der zumindest teilweise mit Dielektrikum gefüllten Antennenelemente kann in vorteilhafter Weise ein Querschnitt, ein Innenquerschnitt, ein Innenumfang, und/oder ein Innendurchmesser der Hohlleiter reduziert sein, so dass insgesamt eine kompakte und robuste Radarantenne bereitgestellt sein kann.

Die Antennenelemente können insbesondere in einem Abstand zueinander angeordnet sein, welcher kleiner oder gleich einer halben Wellenlänge des Radarsignals ist. Damit können Nebenkeulen und/oder Gitterkeulen vermieden werden.

Allgemein kann die Radarantenne für ein V-Band Füllstandmessgerät, ein E-Band Füllstandmessgerät, ein W-Band Füllstandmessgerät, ein F-Band Füllstandmessgerät, ein D-Band Füllstandmessgerät, ein G-Band Füllstandmessgerät, ein Y-Band Füllstandmessgerät, und/oder ein J-Band Füllstandmessgerät ausgeführt sein. Gleichsam kann das Füllstandmessgerät als V-Band Füllstandmessgerät, als E-Band Füllstandmessgerät, als W-Band Füllstandmessgerät, als F-Band Füllstandmessgerät, als D-Band Füllstandmessgerät, als G-Band Füllstandmessgerät, als Y-Band Füllstandmessgerät, und/oder als J-Band Füllstandmessgerät ausgeführt sein. Mit anderen Worten kann eine Frequenz des Radarsignals zwischen 60 GHz und 75 GHz (V-Band), zwischen 60 GHz und 90 GHz (E-Band), zwischen 75 GHz und 110 GHz (W-Band), zwischen 90 GHz und 140 GHz (F-Band), zwischen 110 GHz und 170 GHz (D-Band), zwischen 140 GHz und 220 GHz (G-Band), zwischen 170 GHz und 260 GHz (Y-Band), und/oder zwischen 220 GHz und 320 GHz (J-Band) liegen.

Die Erfindung kann insbesondere als auf den nachfolgend beschriebenen Erkenntnissen beruhend angesehen werden. Unter anderem zur Unterdrückung von Gitterkeulen kann es vorteilhaft sein, die Antennenelemente in einem Abstand kleiner oder gleich der Wellenlänge, insbesondere der halben Wellenlänge, des Radarsignals anzuordnen. Bei einem Füllstandmessgerät, welches beispielsweise in einem Frequenzbereich zwischen 76 GHz und 81 GHz arbeitet, beträgt die halbe Wellenlänge rund 1,85 mm. Dieser Wert korrespondiert zur größten im Radarsignal auftretenden Frequenz von 81 GHz. Jeder Hohlleiter weist eine gewisse Cutoff-Frequenz für elektromagnetische Wellen auf, wobei elektromagnetische Welle mit geringerer Frequenz nicht in dem Hohlleiter geleitet werden können. Die Cutoff-Frequenz hängt dabei von den Abmessungen des Hohlleiters ab, etwa von einem Innendurchmesser im Falle eines Rundhohlleiters oder von den inneren Kantenlängen im Falle eines Rechteckhohleiters. Mit anderen Worten ist die Cutoff-Frequenz proportional zu den Abmessungen des Hohlleiters, z.B. proportional zum Innendurchmesser eines Rundhohlleiters. Dies kann dazu führen, dass luftgefüllte Hohlleiter aufgrund ihrer durch die Cutoff-Frequenz bestimmten Mindestabmessungen, etwa dem Mindestinnendurchmesser, nicht in einem Abstand kleiner oder gleich der halben Wellenlänge des Radarsignals platziert und/oder angeordnet werden können. Werden die Hohlleiter dagegen, wie erfindungsgemäß vorgesehen, mit einem Dielektrikum gefüllt, so reduziert sich die Cutoff-Frequenz sowie damit einhergehend die Mindestabmessungen des Hohlleiters, so dass die Hohlleiter in vorteilhafter Weise in einem Abstand kleiner oder gleich der halben Wellenlänge des Radarsignals angeordnet werden können.

Die Radarantenne und/oder das Füllstandmessgerät sowie dessen Arbeitsfrequenzbereich können in vorteilhafter Weise so ausgelegt sein, dass in den Hohlleitern nur die Grundmode des Radarsignals ausbreitungsfähig ist.

Gemäß einer Ausführungsform der Erfindung sind die Hohlleiter der Antennenelemente derart auf der Trägerplatte ausgerichtet, dass die elektrischen Feldvektoren der Grundmoden der Hohlleiter parallel zueinander oder antiparallel zueinander ausgerichtet sind. Alternativ oder zusätzlich weisen die Antennenelemente identische oder antiparallele Polarisationsrichtungen auf. Die Polarisation kann dabei linear, zirkular oder elliptisch sein. Beispielsweise können die Hohlleiter in identischer Ausrichtung auf der Trägerplatte angeordnet sein.

Gemäß einer Ausführungsform der Erfindung weist jedes der Antennenelemente ein Strahlerelement zum Einkoppeln des Radarsignals in den Hohlleiter und/oder zum Auskoppeln des Radarsignals aus dem Hohlleiter auf, wobei jedes der Strahlerelemente zumindest teilweise in dem Innenvolumen und/oder angrenzend an ein erstes Ende des zugehörigen Hohlleiters angeordnet ist, und wobei die Strahlerelemente derart ausgestaltet und zueinander ausgerichtet sind, dass die in die Hohlleiter eingekoppelten Radarsignale zueinander parallele elektrische Feldvektoren aufweisen. Die Hohlleiter können daher identische Polarisationsrichtungen aufweisen, indem die Hohlleiter, etwa mittels der Strahlerelemente, eines Radarfrontends und/oder eines Radarmoduls des Füllstandmessgeräts, eine identische Einspeisung des Radarsignals in die Hohlleiter und/oder eine Einspeisung in identischer Richtung aufweisen. Hierzu können die Strahlerelemente identisch zueinander ausgebildet und/oder identisch auf der Trägerplatte angeordnet und/oder ausgerichtet sein.

Die elektrischen Feldvektoren der Grundmoden der Hohlleiter können allgemein von einer Geometrie des Hohlleiters und/oder von einer Einspeiserichtung der Strahlerelemente abhängen. Beispielsweise kann sich die Grundmode in einem Rechteckhohlleiter lediglich dann mit geringer Dämpfung in dem Hohlleiter ausbreiten, wenn der elektrische Feldvektor parallel zur Längsseite des Rechteckhohlleiters ausgerichtet ist. Andernfalls erfährt die Grundmode eine starke Dämpfung. Im Falle eines Rundhohlleiters entfällt diese Bedingung jedoch aufgrund der Symmetrie des Rundhohlleiters um dessen Mittelachse. In diesem Fall kann jedoch durch identische Einspeisung des Radarsignals mittels der Strahlerelemente in identischer Einspeiserichtung gewährleistet sein, dass die Polarisationen der Antennenelemente und/oder der Hohlleiter identisch zueinander sind. Hierzu können die Strahlerelemente identisch zueinander ausgebildet und/oder identisch zueinander auf der Trägerplatte angeordnet und/oder ausgerichtet sein. Auch können die Polarisationsrichtungen der Antennenelemente um 180° zueinander gedreht sein und/oder antiparallel zueinander ausgerichtet sein. Insbesondere können die Polarisationsrichtungen der Sendeelemente antiparallel zu den Polarisationsrichtungen der Empfangselemente ausgerichtet sein. Bei anderen Winkelwerten zwischen den Polarisationsrichtungen der Sendelemente und denen der Empfangselemente, würde das reflektierte Signal und/oder das Empfangssignal nur gedämpft etwa in einer Empfängerschaltung des Füllstandmessgeräts ankommen. Gemäß einer Ausführungsform der Erfindung weist das Dielektrikum eine relative Permittivität von wenigstens 1,5, insbesondere wenigstens 1,9, auf. Alternativ oder zusätzlich weist das Dielektrikum Teflon, einen Kunststoff und/oder Polyetheretherketon (PEEK) auf Das Dielektrikum kann insbesondere als Feststoff ausgebildet sein. Durch die relative Permittivität von wenigstens 1,5 kann die Cutoff-Frequenz und somit die Mindestabmessung des Hohlleiters vorteilhaft reduziert sein, so dass die Hohlleiter in dichter Anordnung mit einem Abstand kleiner oder gleich der Wellenlänge, insbesondere kleiner oder gleich der halben Wellenlänge, des Radarsignals angeordnet sein können.

Gemäß einer Ausführungsform der Erfindung sind die Hohlleiter jeweils als Ausnehmungen in der Trägerplatte ausgebildet oder auf einer Außenfläche der Trägerplatte angeordnet. Beide Alternativen können kosteneffizient und in kompakter Bauform hergestellt werden.

Gemäß einer Ausführungsform der Erfindung weist jedes der Antennenelemente eine Linse auf, welche an einem antennenseitigen Ende des zugehörigen Hohlleiters angeordnet ist. Die Linsen können dabei jeweils einstückig mit dem Dielektrikum ausgebildet sein. Das antennenseitige Ende kann dasjenige Ende der Hohlleiter bezeichnen, welches in Emissionsrichtung des Radarsignals liegt und/oder über welches das Radarsignal emittiert wird. Durch die Linsen kann eine Anpassung und/oder Ankopplung der Hohlleiter an den Freiraum in vorteilhafter Weise verbessert sein.

Gemäß einer Ausführungsform der Erfindung ist jeder der Hohlleiter an einem antennenseitigen Ende zur Vergrößerung einer Apertur der Antennenelemente konisch ausgestaltet. Es kann somit ein Ansatz eines Hornstrahlers ausgebildet sein, was den Antennengewinn des Einzelantennenelements und/oder eines einzelnen Antennenelements erhöhen kann.

Gemäß einer Ausführungsform der Erfindung weist jeder der Hohlleiter einen runden, ovalen, elliptischen, rechteckigen, quadratischen oder polygonförmigen Querschnitt auf

Gemäß einer Ausführungsform der Erfindung weist jeder der Hohlleiter einen runden Querschnitt auf, wobei jedes der Antennenelemente zum Senden und/oder Empfangen eines Radarsignals mit einer Frequenz von wenigstens 75 GHz ausgeführt ist, und wobei jeder der Hohlleiter einen Innendurchmesser von weniger als 2,4 mm, insbesondere weniger als 2,34 mm, aufweist.

Gemäß einer Ausführungsform der Erfindung weist die Radarantenne wenigstens ein auf der Trägerplatte angeordnetes Antennendummyelement zur Beeinflussung einer Richtcharakteristik wenigstens eines der Antennenelemente auf, wobei das Antennendummyelement einen Dummyhohlleiter aufweist, welcher mit einem Abschlusswellenwiderstand abgeschlossen ist, kurzgeschlossen ist oder offengelassen ist, so dass über das Antennendummyelement kein Radarsignal emittiert und/oder Empfangen werden kann. Das Antennendummyelement kann dabei ähnlich und/oder identisch zu den übrigen Antennenelementen ausgestaltet sein, jedoch beispielsweise nicht an ein Radarmodul und/oder ein Radarfrontend angeschlossen und/oder nicht mit einem Strahlerelement gekoppelt sein.

Eine Geometrie, eine Struktur, ein Material, eine Abmessung und/oder eine Form des wenigstens einen Antennendummyelements kann zu einer Geometrie, einer Struktur, einem Material, einer Abmessung und/oder einer Form der Antennenelemente korrespondierend ausgebildet sein. Geometrie, Struktur, Material, Abmessung und/oder Form des Antennendummyelements kann mit der Geometrie, der Struktur, dem Material, der Abmessung und/oder der Form der Antennenelemente abgestimmt sein. Insbesondere können die Antennenelemente und das Antennendummyelement eine ähnliche und/oder im Wesentlichen identische Geometrie, Abmessung, Struktur und/oder Form aufweisen. Alternativ oder zusätzlich können die Antennenelemente und das Antennendummyelement aus ähnlichem und/oder im Wesentlichen identischem Material gefertigt sein. Dadurch können in vorteilhafter Weise die Richtcharakteristiken der Antennenelemente aufeinander abgestimmt und/oder aneinander angeglichen werden. Das Antennendummyelement kann neben und/oder angrenzend an wenigstens eines der Antennenelemente auf der Trägerplatte angeordnet sein.

Beispielsweise können die Antennenelemente als dielektrische Leiter und/oder als Koaxialleiter ausgeführt sein, wobei das Antennendummyelement strukturell an den jeweiligen Typen der Antennenelemente angepasst sein kann. Auch können die Antennenelemente etwa ein Kabel zum Fortleiten des Radarsignals aufweisen, wobei das Antennendummyelement zur strukturellen Anpassung an die Antennenelemente beispielsweise ein Kabel und/oder ein Kunststoffrohr aufweisen kann.

Allgemein kann sich das Antennendummyelement von den Antennenelementen dahingehend unterscheiden, dass mit dem Antennendummyelement kein Radarsignal emittiert und/oder gesendet werden kann sowie dahingehend, dass mit dem Antennendummyelement kein an einem Füllgut reflektiertes Signal, auch Empfangssignal genannt, empfangen werden kann. Hierzu kann das Antennendummyelement beispielsweise nicht an ein Radarmodul und/oder ein Radarfrontend des Füllstandmessgeräts angeschlossen sein und entsprechend ausgeführt sein.

Gemäß einer Ausführungsform der Erfindung weist jedes der Antenennelemente einen Hohlleiter zum Leiten des Radarsignals auf. Weiter weist das Antennendummyelement einen Dummyhohlleiter auf, welcher im Wesentlichen identisch und/oder ähnlich zu den Hohlleitern der Antennenelemente ausgebildet ist. Dabei können Geometrie, Struktur, Material, Abmessung und/oder Form der Hohlleiter und Geometrie, Struktur, Material, Abmessung und/oder Form des Dummyhohlleiters aufeinander abgestimmt sein und/oder zueinander korrespondierend ausgestaltet sein. Insbesondere können die Hohlleiter und der Dummyhohlleiter eine identische Geometrie, Abmessung, Form und/oder Struktur aufweisen. Auch können die Hohlleiter und der Dummyhohlleiter aus ähnlichem und/oder demselben Material gefertigt sein. Dadurch können in vorteilhafter Weise die Richtcharakteristiken der Antennenelemente beeinflusst, aneinander angeglichen, und/oder aufeinander abgestimmt werden.

Die Antennenelemente können jeweils ein Strahlerelement zum Einkoppeln und/oder Auskoppeln eines Radarsignals in die Hohlleiter aufweisen. Damit das Antennendummyelement kein Radarsignal senden und/oder empfangen kann, kann vorgesehen sein, dass das Antennendummyelement nicht über ein derartiges Strahlerelement verfügt und/oder dass der Dummyhohlleiter nicht mit einem Strahlerelement gekoppelt ist.

Für eine bessere Nebenkeulendämpfung in der Signalverarbeitung, etwa durch ein Steuergerät des Füllstandmessgeräts, kann es vorteilhaft sein, dass die Richtcharakteristik eines einzelnen Antennenelements sich nicht signifikant von den Richtcharakteristiken der weiteren Antennenelemente unterscheidet. Zur positiven Beeinflussung der Richtcharakteristik des einzelnen Antennenelements kann eines oder mehrere Antennendummyelemente vorgesehen sein, welche gleich oder ähnlich wie die Antennenelemente ausgebildet sein können. Im Gegensatz zu den Antennenelementen können die Antennendummyelemente jedoch nicht an einen Empfänger und/oder Sender angeschlossen sein, sondern mit einem Abschlusswellenwiderstand geschlossen, kurzgeschlossen oder offengelassen werden. Die Antennendummyelemente können neben den Antennenelementen angeordnet sein, so dass die Richtcharakteristiken der benachbarten Antennenelemente sich aneinander angleichen. Die Antennenelemente und die Antennendummyelemente der Radarantenne können dabei in einem Abstand kleiner oder gleich der Wellenlänge, insbesondere kleiner oder gleich der halben Wellenlänge, zueinander angeordnet sein.

Ein zweiter Aspekt der Erfindung betrifft ein Füllstandmessgerät zur Bestimmung eines Füllstandes eines Mediums. Das Füllstandmessgerät kann insbesondere als Topologie erfassendes Füllstandmessgerät und/oder als Füllstandmessgerät zur Erfassung einer Topologie einer Oberfläche eines Füllguts, etwa eines Schüttguts und/oder einer Flüssigkeit, etwa in einem Behälter oder auf einer Schüttguthalde, ausgeführt sein. Das Füllstandmessgerät weist wenigstens eine Radarantenne, so wie voranstehend und nachfolgend beschrieben, auf.

Merkmale und Elemente der Radarantenne, so wie voranstehend und nachfolgend beschrieben, können Merkmale und Elemente des Füllstandmessgerätes, so wie voranstehend und nachfolgend beschrieben, sein. Umgekehrt können Merkmale und Elemente des Füllstandmessgerätes, so wie voranstehend und nachfolgend beschrieben, Merkmale und Elemente der Radarantenne, so wie voranstehend und nachfolgend beschrieben, sein.

Gemäß einer Ausführungsform der Erfindung weist die Radarantenne eine Mehrzahl von als Sendeelemente ausgebildeten Antennenelementen zum Senden des Radarsignals auf, welche in einer ersten Reihe auf der Trägerplatte angeordnet sind. Weiter weist die Radarantenne eine Mehrzahl von als Empfangselemente ausgebildeten Antennenelementen zum Empfangen eines reflektierten Signals auf, welche in einer zweiten Reihe quer zur ersten Reihe auf der Trägerplatte angeordnet sind. Beispielsweise können die Sendelemente und die Empfangselemente der Radarantenne T-förmig auf Trägerplatte angeordnet sein. Mit anderen Worten können die Sendelemente und/oder die Empfangselemente in einer T-förmigen Geometrie auf der Trägerplatte verteilt und/oder angeordnet sein. Beispielsweise kann der horizontale Schenkel der T-Form lediglich Sendelemente und der vertikale Schenkel lediglich Empfangselemente aufweisen oder umgekehrt. Allgemein können auf der Trägerplatte die Sendelemente in einer ersten Reihe und die Empfangselemente in einer zweiten Reihe angeordnet sein. Die erste Reihe kann sich dabei quer zur zweiten Reihe erstrecken und/oder quer zur zweiten Reihen verlaufen und/oder quer zur zweiten Reihe angeordnet sein. Insbesondere kann die erste Reihe im Wesentlich orthogonal zur zweiten Reihe verlaufen und so die T-Form bilden. Durch ein geeignetes Multiplexing, insbesondere ein Zeitmultiplexing, der Sendeelemente und/oder der Empfangselemente sowie durch geeignete Auswertung der mit jedem Empfangselement empfangenen reflektierten Signale bzw. Empfangssignale kann auf diese Weise eine Kollektion von Echokurven identifiziert werden, welche einer rechteckigen Anordnung eines virtuellen Arrays entsprechen kann. Ferner kann so in vorteilhafter Weise eine Anzahl von Sendelementen und/oder Empfangselementen und damit Herstellungskosten des Füllstandmessgeräts reduziert sein.

Ein dritter Aspekt der Erfindung betrifft ein Verfahren zur Herstellung einer Radarantenne. Das Verfahren weist dabei die folgenden Schritte auf:
- Anordnen von wenigstens zwei Antennenelementen zum Senden und/oder Empfangen eines Radarsignals auf einer Trägerplatte der Radarantenne, wobei jedes der Antenennelemente einen Hohlleiter zum Leiten des Radarsignals aufweist; und
- zumindest teilweises Befüllen eines Innenvolumens jedes Hohlleiters mit einem Dielektrikum, wobei die Antennenelemente in einem Abstand zueinander angeordnet sind, welcher kleiner oder gleich einer Wellenlänge, insbesondere kleiner oder gleich einer halben Wellenlänge, des Radarsignals ist.

Merkmale und Elemente der Radarantenne und/oder des Füllstandmessgeräts, so wie voranstehend und nachfolgend beschrieben, können Merkmale, Elemente und/oder Schritte des Verfahrens, so wie voranstehend und nachfolgend beschrieben, sein. Umgekehrt können Merkmale, Elemente und/oder Schritte des Verfahrens, so wie voranstehend und nachfolgend beschrieben, Merkmale und Elemente der Radarantenne und/oder des Füllstandmessgeräts, so wie voranstehend und nachfolgend beschrieben, sein.

Im Folgenden werden Ausführungsbeispiele der Erfindung mit Bezug auf die beigefügten Figuren im Detail beschrieben.

### Kurze Beschreibung der Figuren

Fig. 1 zeigt ein Topologie erfassendes Füllstandmessgerät gemäß Ausführungsbeispiel.
Fig. 2A zeigt ein Topologie erfassendes Füllstandmessgerät gemäß einem Ausführungsbeispiel der Erfindung.
Fig. 2B zeigt eine Radarantenne des Füllstandmessgeräts aus Fig. 2A.
Fig. 3 zeigt eine Radarantenne gemäß einem Ausführungsbeispiel.
Fig. 4 zeigt eine Radarantenne gemäß einem Ausführungsbeispiel der Erfindung.
Fig. 5A zeigt ein Antennenelement für eine Radarantenne gemäß einem Ausführungsbeispiel der Erfindung.
Fig. 5B zeigt einen Längsschnitt durch das Antennenelement aus Fig. 5A.
Fig. 6 zeigt eine Radarantenne gemäß einem Ausführungsbeispiel der Erfindung.
Fig. 7 zeigt eine Radarantenne gemäß einem Ausführungsbeispiel der Erfindung.
Fig. 8A zeigt eine Radarantenne gemäß einem Ausführungsbeispiel der Erfindung.
Fig. 8B zeigt ein Antennendiagramm ohne Einsatz von Antennendummyelementen.
Fig. 8C zeigt ein Antennendiagramm mit Einsatz von Antennendummyelementen gemäß dem Ausführungsbeispiel der Fig. 8A.
Fig. 9 zeigt ein Antennenelement für eine Radarantenne gemäß einem Ausführungsbeispiel der Erfindung.
Fig. 10 zeigt ein Flussdiagramm zur Illustration von Schritten eines Verfahrens zur Herstellung einer Radarantenne gemäß einem Ausführungsbeispiel der Erfindung.

Die Darstellungen in den Figuren sind schematisch und nicht maßstäblich. Werden in verschiedenen Figuren die gleichen Bezugszeichen verwendet, so können diese gleiche, gleichwirkende oder ähnliche Elemente bezeichnen.

### Detaillierte Beschreibung von Ausführungsbeispielen

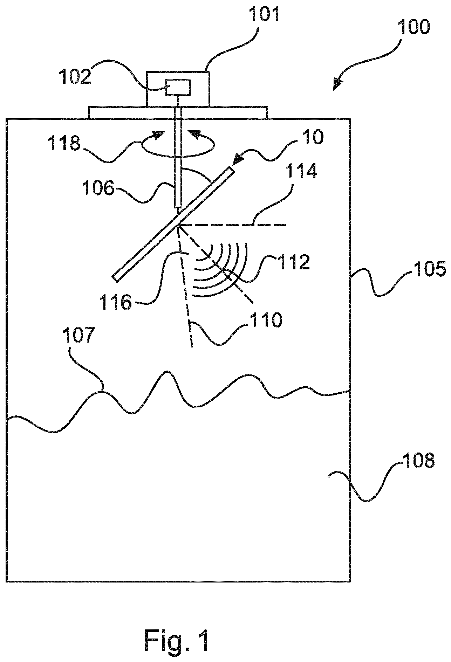

Fig. 1 zeigt ein Topologie erfassendes Füllstandmessgerät 100, auch topologiebestimmendes Füllstandmessgerät 100 genannt, gemäß einem Ausführungsbeispiel. Das Füllstandmessgerät 100 weist eine Steuereinheit 101 mit einem elektrischen Steuer-Schaltkreis 102 sowie einer Radarantenne 10 auf. Das Füllstandmessgerät der Fig. 1 ist als sogenannter rotierender Zeilenscanner 100 ausgeführt, wobei die Radarantenne 10 über eine Antennenhalterung 106 mit der Steuereinheit 101 verbunden und/oder gekoppelt ist. Derartige Füllstandmessgeräte 100 werden insbesondere bei Schüttgutmessungen in einem Behälter 105 oder auf einer offenen Halde eingesetzt, wobei der Verlauf der Oberfläche 107 des Schüttguts 108 und/oder die Topologie der Füllgutoberfläche 107 des Füllgutes 108 ermittelt werden kann.

Die Radarantenne 10 kann mit einem oder mehreren Sendelementen und/oder Empfangselementen bestückt sein, was eine Veränderung der Hauptstrahlrichtung und/oder der Hauptempfangsrichtung 110, 112, 114 in vorgebbaren Winkelwerten 116 erlauben kann. Damit können Echosignale und/oder Echokurven aus den unterschiedlichen Hauptstrahlrichtungen und/oder Hauptempfangsrichtungen 110, 112, 114 erfasst werden. Durch zusätzliches Drehen 118 der Antennenhalterung 106, welche gleichsam eine Achse 106 festlegen kann, kann somit jeder Punkt der Füllgutoberfläche 107 des Füllguts 108 vermessen werden. Vorteilhaft an dieser kombinierten Vorrichtung zur elektronischen und mechanischen Strahlablenkung ist, dass im Falle der elektronischen Strahlablenkung lediglich ein Maximalwinkel 116 von typischerweise +-45° eingestellt werden muss, um den ganzen Behälter 105 bis zum Zustand vollständiger Befüllung vermessen zu können.

Aufgrund der verwendeten Mechanikkomponenten, wie etwa der drehbaren Antennenhalterung 106, kann das in Fig. 1 gezeigte Füllstandmessgerät 100 jedoch verschleiß anfällig und teuer sein.

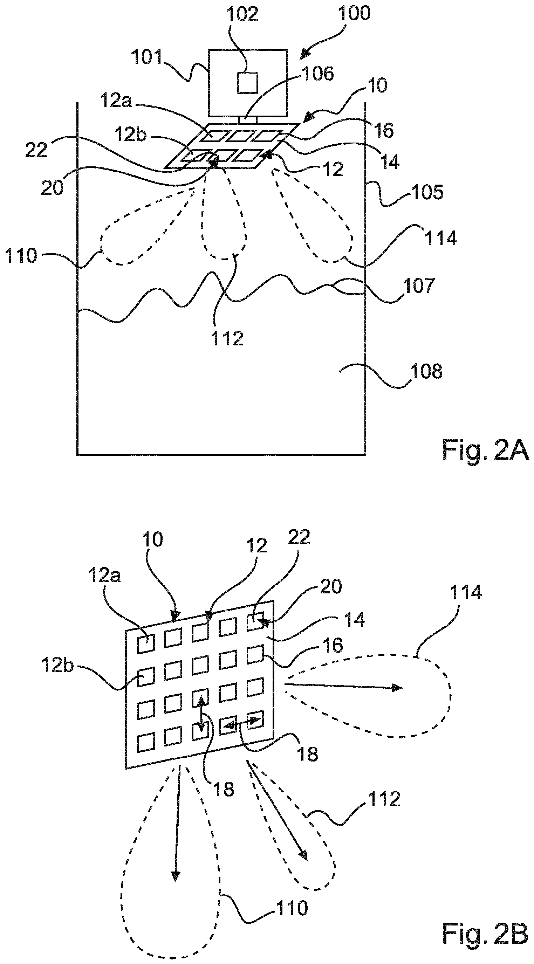

Fig. 2A zeigt ein Topologie erfassendes Füllstandmessgerät 100 gemäß einem Ausführungsbeispiel der Erfindung. Fig. 2B zeigt eine Radarantenne 10 des Füllstandmessgeräts 100 aus Fig. 2A. Sofern nicht anders beschrieben, weist das Füllstandmessgerät 100 der Fig. 2A und/oder die Radarantenne 10 der Fig. 2B dieselben Merkmale und Elemente auf wie das Füllstandmessgerät 100 der Fig. 1.

Im Gegensatz zu dem Füllstandmessgerät 100 der Figur 1 weist das Füllstandmessgerät 100 der Figuren 2A und 2B eine Radarantenne 10 auf, welche mechanisch starr über eine Befestigungseinrichtung 106 und/oder Antennenhalterung 106 mit der Steuereinheit 101 verbunden ist. Durch diese Konstruktion kann ein Verschleiß von Komponenten des Füllstandmessgeräts 100 wirkungsvoll reduziert sein.

Die Radarantenne 10 weist zwei oder mehr Antennenelemente 12 zum Senden eines Radarsignals und/oder zum Empfangen eines an der Oberfläche 107 reflektierten Signals bzw. Empfangssignals auf. Gleichsam können die Antennenelemente 12 Sendeelemente 12a und/oder Empfangselemente 12b bezeichnen. Allgemein kann ein Teil der Antennenelemente 12 lediglich zum Senden eines Radarsignals, d.h. als Sendeelemente 12a, ausgeführt sein. Ein weiterer Teil der Antennenelemente 12 kann lediglich zum Empfangen des reflektierten Signals bzw. Empfangssignals, d.h. als Empfangselemente 12b, ausgeführt sein. Alternativ können alle Antennenelemente 12 zum Senden und Empfangen, d.h. sowohl als Sendeelemente 12a als auch als Empfangselemente 12b, ausgeführt sein.

Die Antennenelemente 12 sind dabei auf einer Trägerplatte 14, etwa einer metallischen Trägerplatte 14, der Radarantenne 10 angeordnet. Grundsätzlich können die Antennenelemente 12 in einer beliebigen Anordnung, insbesondere einer zweidimensionalen Anordnung, auf der Trägerplatte 14 angeordnet sein, beispielsweise in einer oder mehreren Reihen und/oder Spalten.

Jedes der Antennenelemente 12 weist einen Hohlleiter 16 zur Fortleitung und/oder zum Leiten des Radarsignals, d.h. zum Leiten eines Sendesignals und/oder eines Empfangssignals, auf. Die Hohlleiter 16 der Antennenelemente 12 können dabei als Ausnehmungen und/oder Öffnungen in der Trägerplatte 14 ausgebildet sein. Alternativ oder zusätzlich können die Hohlleiter 16 auf einer Außenfläche der Trägerplatte 14 angebracht und/oder befestigt sein.

Die Hohlleiter 16 können dabei einen runden, einen ovalen, einen elliptischen, einen rechteckigen, einen quadratischen oder einen polygonförmigen Querschnitt aufweisen. Die Hohlleiter 16 können jeweils identische Querschnitte aufweisen.

Jeweils direkt benachbarte Antennenelemente 12 und/oder Hohlleiter 16 sind dabei in einem Abstand 18 zueinander auf der Trägerplatte 14 angeordnet, welcher kleiner oder gleich einer Wellenlänge des Radarsignals ist. Dabei sind sowohl die in vertikaler Richtung direkt benachbarten als auch in horizontaler Richtung direkt benachbarten Antennenelemente 12 und/oder Hohlleiter 16 in diesem Abstand 18 zueinander angeordnet. Mit anderen Worten kann jedes der Antennenelemente 12 und/oder Hohlleiter 16 einen Abstand 18 zu den umliegenden und direkt benachbarten Antennenelementen 12 und/oder Hohlleitern 18 aufweisen, welcher kleiner oder gleich der Wellenlänge ist. Der Abstand 18 kann dabei jeweils zwischen den Zentren und/oder Mittelachsen der direkt benachbarten Hohlleiter 16 bemessen sein. Insbesondere kann der Abstand 18 zur Vermeidung von Gitter- und/oder Nebenkeulen kleiner oder gleich einer halben Wellenlänge des Radarsignals sein.

Damit die einzelnen Antennenelemente 12 und/oder Hohlleiter 16 in einem Abstand 18 kleiner oder gleich der Wellenlänge des Radarsignals, insbesondere kleiner oder gleich der halben Wellenlänge des Radarsignals, auf der Trägerplatte 14 angeordnet werden können, ist ein Innenvolumen 20 jedes Hohlleiters 16 zumindest teilweise, insbesondere vollständig, mit einem Dielektrikum 22 und/oder einem dielektrischen Material 22 gefüllt. Dadurch kann in vorteilhafter Weise eine Cutoff-Frequenz der Antennenelemente 12 und damit einhergehend eine Mindestabmessung der Hohlleiter 16 reduziert sein, so dass die Antennenelemente 12 und/oder die Hohlleiter in dem Abstand 18 zueinander angeordnet werden können, wie in nachfolgenden Figuren detailliert erläutert.

Das Füllstandmessgerät 100 kann zur Vermessung der Füllgutoberfläche 107 auf einer Strahlablenkung mittels Verfahren zur analogen und/oder digitalen Strahlablenkung ausgeführt und/oder eingerichtet sein. Dabei können die Hauptstrahlrichtung und/oder Hauptempfangsrichtung 110, 112, 114 auf elektronischem Weg, d.h. ohne mechanische Bewegung von Komponenten des Füllstandmessgerätes 100, verändert werden.

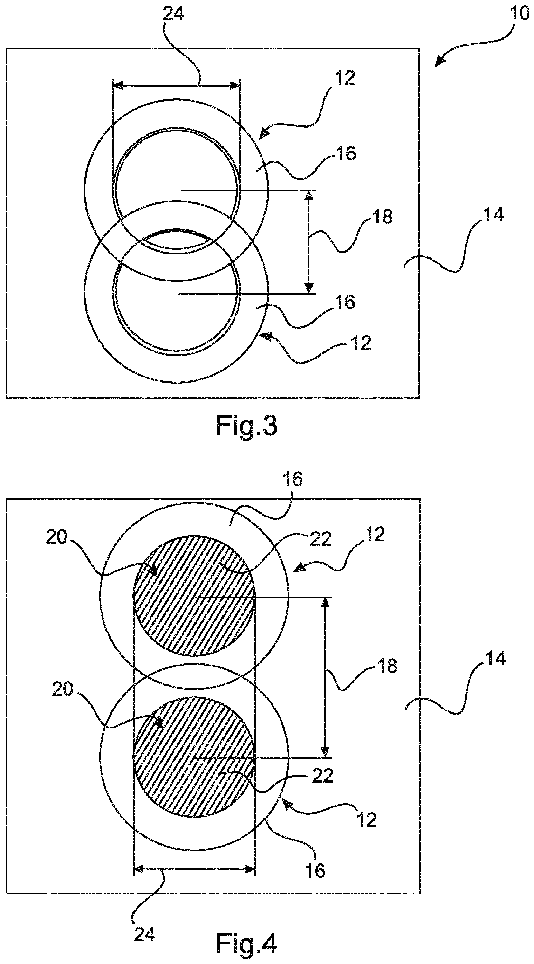

Fig. 3 zeigt eine Radarantenne 10 gemäß einem Ausführungsbeispiel. Sofern nicht anders beschrieben, weist die Radarantenne 10 der Fig. 3 dieseleben Merkmale und Elemente wie die Radarantennen 10 der Figuren 1 bis 2B auf.

Die in Figur 3 dargestellte Radarantenne 10 weist zwei Antennenelemente 12 mit jeweils einem Rundhohlleiter 16 auf. Die Rundhohlleiter 16 sind dabei jeweils mit Luft, d.h. nicht mit einem Dielektrikum 22, gefüllt.

Wenn die Radarantenne 10 für ein W-Band Füllstandmessgerät 100 mit einer Sendefrequenz des Radarsignals in einem Bereich von beispielsweise 76 GHz bis 81 GHz eingesetzt werden soll, so beträgt die halbe Wellenlänge des 81 GHz Signalanteils rund 1,85 mm. Des Weiteren beträgt ein Mindestdurchmesser 24 bei einer Cutoff-Frequenz von rund 75 GHz rund 2,34 mm. Somit können derartige luftgefüllte Antennenelemente 12 nicht in einem Abstand 18 kleiner oder gleich der halben Wellenlänge von rund 1,84 mm auf der Trägerplatte 14 angeordnet werden, da die Hohlleiter 16 bei derartiger Anordnung überlappen und in die Innenvolumina benachbarter Hohlleiter hineinragen würden, wie in Figur gezeigt. Daher müssen die Antennenelemente 12 in einem Abstand 18 größer der halben Wellenlänge zueinander angeordnet werden, weshalb Gitter- und Nebenkeulen kaum vermeidbar sind, was wiederum negative Auswirkungen auf eine Messgenauigkeit haben kann.

Fig. 4 zeigt eine Radarantenne 10 gemäß einem Ausführungsbeispiel der Erfindung. Sofern nicht anders beschrieben, weist die Radarantenne 10 der Figur 4 dieseleben Merkmale und Elemente wie die Radarantennen 10 der Figuren 1 bis 3 auf.

Um die mit Bezug auf Figur 3 beschriebene Problematik zu beheben, ist erfindungsgemäß vorgesehen, jedes Antennenelement 12 und/oder jeden Hohlleiter 16 mit einem Dielektrikum 22 zumindest teilweise, insbesondere vollständig, zu füllen. Mit anderen Worten sind die Innenvolumina 20 jedes Hohlleiters 16 jeweils mit Dielektrikum 22 gefüllt. Durch die Füllung der Hohlleiter 16 mit Dielektrikum reduziert sich die Cutoff-Frequenz, so dass die Hohlleiter 16 jeweils mit geringerer Mindestabmessung 24 und/oder geringerem Mindestdurchmesser 24 ausgebildet werden können. Dadurch kann der Abstand 18 zwischen den einzelnen Antennenelementen 12 und/oder Hohlleitern 16 auf einen Wert kleiner oder gleich der halben Wellenlänge reduziert werden.

Beispielsweise kann das Dielektrikum 22 eine relative Permittivität von wenigstens 1,5, insbesondere wenigstens 1,9 aufweisen. Insbesondere kann das Dielektrikum 22 Teflon, einen Kunststoff und/oder PEEK aufweisen. PEEK hat eine relative Permittivität zwischen 3,1 und 3,8. Wenn die Radarantenne 10 für ein W-Band Füllstandmessgerät 100 mit einer Sendefrequenz des Radarsignals in einem Bereich von beispielsweise 76 GHz bis 81 GHz eingesetzt wird, so beträgt die halbe Wellenlänge des 81 GHz Signalanteils rund 1,85 mm. Des Weiteren beträgt der Mindestdurchmesser 24 der mit Dielektrikum 22 gefüllten Hohlleiter 16 je nach Wert der relativen Permittivität bei einer Cutoff-Frequenz von rund 75 GHz weniger als 1,8 mm, insbesondere weniger als 1,6 mm und vorzugsweise rund 1,4 mm. Aufgrund des reduzierten Mindestdurchmessers 24 können die Hohlleiter 16 daher in einem Abstand kleiner oder gleich der halben Wellenlänge zueinander angeordnet werden.

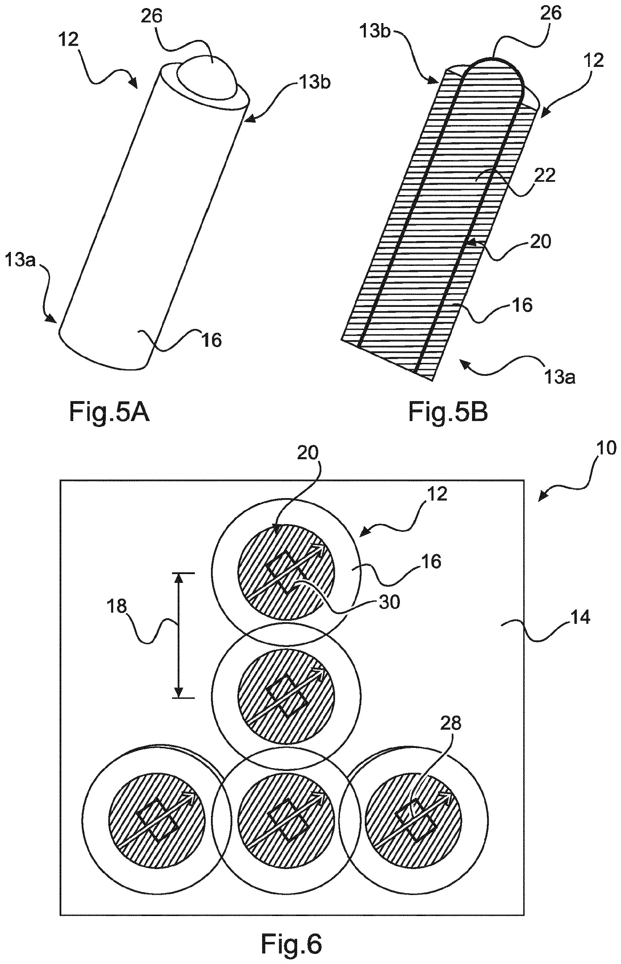

Fig. 5A zeigt ein Antennenelement 12 für eine Radarantenne 10 gemäß einem Ausführungsbeispiel der Erfindung. Fig. 5B zeigt einen Längsschnitt durch das Antennenelement 12 aus Fig. 5A. Sofern nicht anders beschrieben, weist das Antennenelement 12 der Figuren 5A und 5B dieseleben Elemente und Merkmale wie die in voranstehenden Figuren beschriebenen Antennenelemente 12 auf.

Das Antennenelement 12 der Figuren 5A und 5B weist einen Rundholleiter 16 auf, dessen Innenvolumen 20 zumindest teilweise, insbesondere vollständig, mit Dielektrikum 22 gefüllt ist. Grundsätzlich kann der Hohlleiter 16 einen beliebigen anderen Querschnitt aufweisen, etwa einen elliptischen, ovalen, rechteckigen, quadratischen oder polygonförmigen.

Ferner weist das Antennenelement 12 und/oder der Rundhohlleiter 16 ein erstes Ende 13a zur Anordnung und/oder Befestigung des Antennenelements 12 auf der Trägerplatte 14 der Radarantennen 10 auf. Weiter weist das Antennenelement 12 und/oder der Rundhohlleiter 16 ein dem ersten Ende 13a in Längserstreckungsrichtung des Rundhohlleiter 16 gegenüberliegendes zweites Ende 13b auf. Das zweite Ende 13b bezeichnet dabei ein antennenseitiges Ende 13b des Antennenelements 12, welches in einer Emissionsrichtung des Antennenelements 12 orientiert und/oder ausgerichtet ist. Das zweite Ende 13b ist somit dazu ausgeführt, das Radarsignal abzustrahlen und/oder das Empfangssignal zu empfangen. Wenn der Hohlleiter 16 als Ausnehmung und/oder Öffnung in der Trägerplatte 14 ausgestaltet ist, so kann das zweite Ende 13b eine Hohlleiteröffnung 13b an einer dem Füllgut 108 zugewandten, antennenseitigen Außenfläche der Trägerplatte 14 bezeichnen.

An dem zweiten Ende 13b des Antennenelements 12 weist das Antennenelement 12 eine Linse 26 auf, welche zumindest teilweise von dem zweiten Ende 13b des Antennenelements 12 abragt. Die Linse 26 ist dabei halbkugelförmig ausgebildet, jedoch kann die Linse 26 eine beliebige andere Geometrie aufweisen. Insbesondere kann eine Geometrie und/oder Form der Linse 26 an eine Form einer Querschnittsfläche des Hohlleiters 16 angepasst sein. Durch die Linse 26 kann eine bessere Anpassung des Hohlleiters 16 an einen Freiraum erreicht werden.

Die Linse 26 kann aus einem Dielektrikum und/oder einem dielektrischen Material gebildet sein. Insbesondere kann die Linse 26 aus demselben Dielektrikum 22 gebildet sein, mit welchem das Innenvolumen 20 des Hohlleiters 16 gefüllt ist. Eine relative Permittivität der Linse 26 bzw. des Materials der Linse 26 kann wenigstens 1,5 und insbesondere wenigstens 1,9 betragen. Beispielsweise kann die Linse 26 aus Kunststoff, Teflon und/oder PEEK gebildet sein.

Die Linse 26 und das Dielektrikum 22 in dem Innenvolumen 20 des Hohlleiters 16 können zweiteilig oder einstückig ausgebildet sein.

Fig. 6 zeigt eine Radarantenne 10 gemäß einem Ausführungsbeispiel der Erfindung. Sofern nicht anders beschrieben, weist die Radarantenne 10 der Figur 6 dieseleben Elemente und Merkmale auf wie die Radarantennen 10 der voranstehenden Figuren.

Die Radarantenne 10 der Figur 6 weist mehrere Antennenelement 12 auf, welche jeweils einen Rundhohlleiter 16 aufweisen. Das Innenvolumen 20 jedes Hohlleiters 16 ist mit Dielektrikum 22 gefüllt. Optional kann jedes der Antennenelemente 12 eine an dem antennenseitigen Ende 13b angeordnete Linse 26 aufweisen.

Alle Antennenelemente 12 der Radarantenne 10 weisen die gleiche Polarisationsrichtung 28 auf. Die Polarisationsrichtung 28 kann dabei eine Orientierung und/oder Richtung des elektrischen Feldvektors 28 der Grundmode in den Hohlleitern 16 angeben.

Da die in Figur 6 gezeigten Hohlleiter 16 als Rundhohlleiter 16 ausgebildet sind, kann der elektrische Feldvektor 28 grundsätzlich in jeder Richtung quer und/oder orthogonal zu einer Mittelachse und/oder Symmetrieachse der Hohlleiter 16 ausgerichtet sein.

Jedes der Antennenelemente 12 weist ein Strahlerelement 30 zur Einkopplung und/oder Auskopplung des Radarsignals in bzw. aus den Hohlleitern 16 auf. Die Strahlerelemente 30 können etwa als leitfähige Plättchen, auch Patch und/oder Patch-Antennenelement 30 genannt, ausgebildet sein, welche jeweils beispielsweise über eine an ein Radarmodul und/oder an ein Radarfrontend des Füllstandmessgeräts 100 gekoppelte Mikrostreifenleitung gespeist werden können. Jedes der Strahlerelemente 30 ist zumindest teilweise in dem Innenvolumen 22 des zugehörigen Hohlleiters 16 angeordnet. Insbesondere können die Strahlerelemente 30 an dem ersten Ende 13a eines jeden Hohleiters 16 angeordnet sein.

Um die Polarisationsrichtungen 28 der einzelnen Hohlleiter 16 parallel zueinander auszurichten, weisen alle Strahlerelemente 30 dieselbe Geometrie und/oder Form auf. Ferner sind alle Strahlerelemente 30 in zueinander identischer Orientierung und/oder Ausrichtung auf der Trägerplatte 14 ausgerichtet, so dass die Einspeiserichtungen der Strahlerelemente 30 identisch zueinander sind und die in die Hohlleiter 16 eingekoppelten Radarsignale zueinander parallele elektrische Feldvektoren 28 aufweisen. Mit anderen Worten weisen die Hohlleiter 16, etwa seitens des Radarfrontends, die gleiche Einspeisung in gleicher Ausrichtung auf. Alternativ können die Polarisationsrichtungen 28 einzelner Antennenelemente 12 antiparallel, d.h. um 180° zueinander gedreht, sein. Allgemein kann die Polarisation linear, zirkular oder elliptisch sein.

Sind die Hohlleiter 16 nicht als Rundhohlleiter 16 ausgebildet, sondern weisen einen anderen Querschnitt auf, so kann ein elektrischer Feldvektor der Grundmode der Hohlleiter 16 eine bestimmte Richtung und/oder Orientierung aufweisen.
Ein Rechteckhohlleiter 16 weist beispielsweise eine Schmalseite und eine länger als die Schmalseite ausgebildete Breitseite auf. Im Falle des Rechteckhohlleiters 16 ist der elektrische Feldvektor der Grundmode stets parallel zur Breitseite ausgerichtet. Damit die Polarisationsrichtungen 28 der einzelnen Hohlleiter 16 in diesem Fall parallel zueinander sind, können die Hohlleiter 16 in identischer Orientierung und/oder Ausrichtung auf der Trägerplatte 14 angeordnet sein.

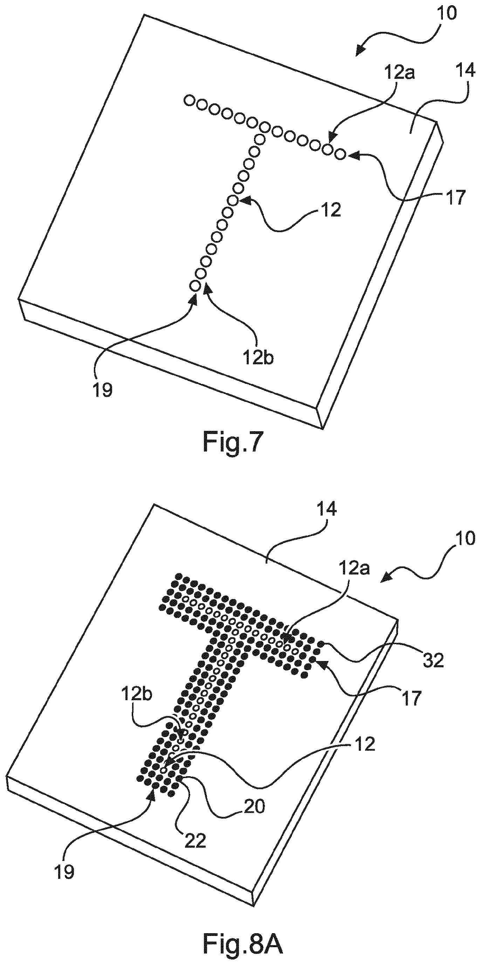

Fig. 7 zeigt eine Radarantenne 10 gemäß einem Ausführungsbeispiel der Erfindung. Sofern nicht anders beschrieben, weist die Radarantenne 10 der Figur 7 dieseleben Elemente und Merkmale auf wie die Radarantennen 10 der voranstehenden Figuren.

Ein Teil der Antennenelemente 12 ist in einer ersten Reihe 17 und/oder entlang einer ersten Richtung 17 hintereinander und/oder nebeneinander auf der Trägerplatte 14 angeordnet. Ein weiterer Teil der Antennenelemente 12 ist in einer zweiten Reihe 19 und/oder entlang einer zweiten Richtung 19 hintereinander und/oder nebeneinander auf der Trägerplatte 14 angeordnet. Die erste Reihe 17 und/oder die erste Richtung 17 verläuft dabei quer, insbesondere orthogonal, zur zweiten Reihe 19 und/oder zur zweiten Richtung 19. Bei dem in Figur 7 illustrierten Ausführungsbeispiel sind die Antennenelemente 12 in einer T-förmigen Anordnung auf der Trägerplatte 14 angeordnet.

Die Antennenelemente 12 der ersten Reihe 17, welche einen ersten Schenkel 17 der T-Form bezeichnen kann, können etwa als Sendeelemente 12a ausgestaltet sein, und die Antennenelemente 12 der zweiten Reihe 19, welche einen zweiten Schenkel 19 der T-Form bezeichnen kann, können als Empfangselemente 12b ausgestaltet sein. Alternativ können die Antennenelemente 12 der ersten Reihe 17 als Empfangselemente 12b und die Antennenelemente 12 der zweiten Reihe als Sendeelemente 12a ausgestaltet sein. Auch können alle Antennenelemente 12 als Sendeelemente 12a und Empfangselemente 12b ausgestaltet sein. Allgemein kann durch die T-förmige Anordnung eine Komplexität der Radarantennen 10 und/oder des Füllstandmessgerätes 100 ohne Einbußen an Messgenauigkeit reduziert sein.

Die Antennenelemente 12 der ersten Reihe 17, welche etwa als Sendelemente 12a ausgestaltet sein können, können etwa von der Steuereinheit 101 des Füllstandmessgerätes 100 im Zeitmultiplex nacheinander aktiviert, angesteuert und/oder betrieben werden. Über die Antennenelemente 12 der zweiten Reihe 19, welche etwa als Empfangselemente 12b ausgestaltet sein können, können die an der Schüttgutoberfläche 107 reflektierten Signale empfangen werden. Durch eine geeignete von der Steuereinheit 101 und/oder einer Elektronik der Radarantenne 10 und/oder des Füllstandmessgeräts 100 vorgenommene Auswertung der erhaltenen Echosignale kann eine Kollektion an Echokurven identifiziert werden, welche exakt der Kollektion entspricht, welche mit einer virtuellen, rechteckigen Anordnung von Antennenelementen 12 erhalten wird. Mit anderen Worten kann basierend auf Zeitmultiplexing und/oder geeigneter Auswertung mit den T-förmig angeordneten Antennenelementen 12 dasselbe Messergebnis erzielt werden wie mit einem rechteckigen virtuellen Array von Antennenelementen 12. Da die Antennenelemente 12 des virtuellen Arrays jeweils einen Abstand zueinander aufweisen, welcher kleiner oder gleich der halben Wellenlänge des verwendeten Radarsignals ist, kann eine eindeutige digitale und/oder analoge Strahlformung auf Basis dieser Daten durchgeführt werden, ohne dass durch aufkommende Gitterkeulen die Messgenauigkeit reduziert wird.

Fig. 8A zeigt eine Radarantenne 10 gemäß einem Ausführungsbeispiel der Erfindung. Sofern nicht anders beschrieben, weist die Radarantenne 10 der Figur 8A dieseleben Elemente und Merkmale auf wie die Radarantennen 10 der voranstehenden Figuren.

Die Radarantenne 10 der Figur 8A entspricht der Radarantenne 10 der Figur 7, wobei die T-förmig angeordneten Antennenelemente 12 zusätzlich von Antennendummyelementen 32 umgeben sind. Mit anderen Worten weist die Radarantenne 10 der Figur 8A eine Mehrzahl von Antennendummyelementen 32 auf, welche ebenso auf der Trägerplatte 14 angeordnet sind und welche ähnlich und/oder identisch identisch zu den Antennenelementen 12 ausgebildet sind. Die Antennendummyelemente 32 weisen daher ebenso einen Hohlleiter 16, etwa einen Dummyhohlleiter 16, auf, dessen Innenvolumen 20 mit Dielektrikum 22 gefüllt ist. Auch sind die Antennenelemente 12 und die Antennendummyelemente 32 in einem Abstand 18 zueinander angeordnet, welcher kleiner oder gleich der Wellenlänge, insbesondere der halben Wellenlänge, des Radarsignals ist. In Figur 8A sind die Antennenelemente 12, etwa die Sendeelemente 12a und/oder die Empfangselemente 12b, als nicht ausgefüllte und/oder weiße Kreise schematisch illustriert, wohingegen die Antennendummyelemente 32 als gefüllte und/oder schwarze Kreise illustriert sind.

Im Gegensatz zu den Antennenelementen 12 sind die Antennendummyelemente 32 jedoch nicht zum Senden und/oder Empfangen eines Radarsignals ausgestaltet, sondern die Dummyhohlleiter 16 der Antennendummyelemente 32 sind mit einem Abschlusswellenwiderstand, etwa einem 50 Ohm Abschlusswellenwiderstand, abgeschlossen, kurzgeschlossen oder offengelassen, so dass über die Antennendummyelemente 32 kein Radarsignal emittiert werden kann.

Die Antennendummyelemente 32 sind dabei zur Beeinflussung der Richtcharakteristiken der Antennenelemente 12 vorgesehen, was für eine bessere Nebenkeulendämpfung in der späteren Signalverarbeitung vorteilhaft sein kann. Durch die Antennendummyelemente 32 können die Richtcharakteristiken jedes einzelnen Antennenelements 12 aufeinander abgestimmt werden, so dass diese nahezu identisch sind und/oder sich nicht signifikant unterscheiden.

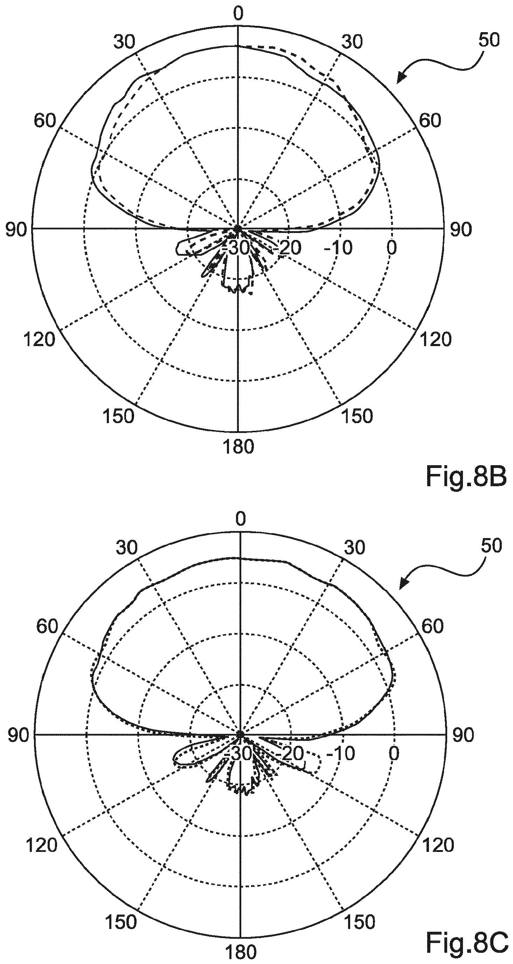

Der voranstehend beschriebene Effekt der Antennendummyelemente 32 auf die Richtcharakteristik ist in den Figuren 8B und 8C illustriert.

Dabei zeigt Figur 8B ein Antennendiagramm 50 ohne Einsatz von Antennendummyelementen 32 für ein Antennenelement 12 einer Radarantenne 10 als durchgezogene Linie und ein weiteres Antennenelement 12 als gestrichelte Linie, wobei die gestrichelte und die durchgezogene Linie jeweils die Richtcharakteristik des entsprechenden Antennenelements 12 repräsentieren. Deutlich erkennbar weichen die Richtcharakteristiken der beiden Antennenelemente 12 in bestimmten Winkelbereichen signifikant voneinander ab.

Im Gegensatz zur Figur 8B zeigt Figur 8C ein Antennendiagramm 50 mit Einsatz von Antennendummyelementen 32 für ein Antennenelement 12 der Radarantenne 10 aus Figur 8A als durchgezogene Linie und für ein weiteres Antennenelement 12 der Radarantenne 10 aus Figur 8A als gestrichelte Linie, wobei die gestrichelte und die durchgezogene Linie jeweils die Richtcharakteristik des entsprechenden Antennenelements 12 repräsentieren. Ein Vergleich der beiden Figuren 8B und 8C zeigt deutlich, dass die Richtcharakteristiken der beiden Antennenelemente 12 durch Anordnung von Antennendummyelementen 32 aneinander angenähert und/oder aufeinander abgestimmt werden, so dass die Richtcharakteristiken der beiden Antennenelemente 12 in vorteilhafter Weise in einem Großteil des Winkelbereichs nahezu identisch sind.

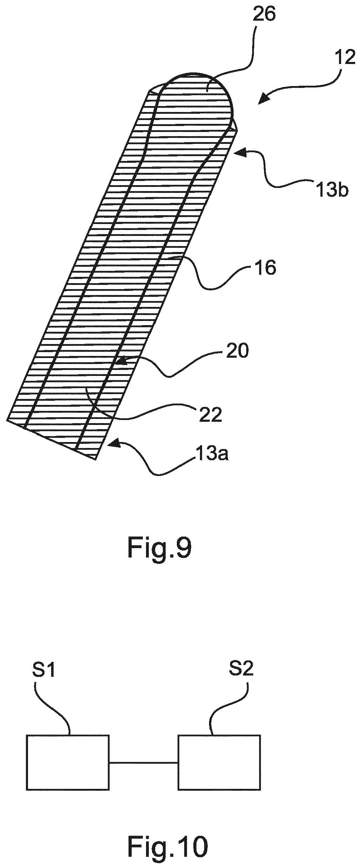

Fig. 9 zeigt ein Antennenelement 12 für eine Radarantenne 10 gemäß einem Ausführungsbeispiel der Erfindung. Sofern nicht anders beschrieben, weist das Antennenelement 12 der Figur 9 dieseleben Elemente und Merkmale auf wie die Antennenelemente 12 der voranstehenden Figuren.

Wie in Figur 9 ersichtlich, ist das Antennenelement 12 an dem antennenseitigen zweiten Ende 13b konisch ausgestaltet, wodurch in vorteilhafter Weise eine Apertur vergrößert werden kann. Durch die konische Ausgestaltung kann sich gleichsam der Ansatz eines Hornstrahlers ausbilden, was den Antennengewinn vergrößern kann.

Fig. 10 zeigt ein Flussdiagramm zur Illustration von Schritten eines Verfahrens zur Herstellung einer Radarantenne 10 gemäß einem Ausführungsbeispiel der Erfindung.

In einem ersten Schritt S1 werden wenigstens zwei Antennenelemente 12 zum Senden und/oder Empfangen eines Radarsignals auf einer Trägerplatte 14 der Radarantenne 10 angeordnet, wobei jedes der Antenennelemente 12 einen Hohlleiter 16 zum Leiten des Radarsignals aufweist. Dabei werden die Antennenelemente 12 in einem Abstand zueinander angeordnet, welcher kleiner oder gleich der Wellenlänge des Radarsignals, insbesondere kleiner oder gleich der halben Wellenlänge, ist.

In einem weiteren Schritt S2 werden die Innenvolumina 20 jedes Hohlleiters 16 mit einem Dielektrikum 22 zumindest teilweise, insbesondere vollständig, gefüllt.

Ergänzend sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkungen anzusehen.

## Patentansprüche

1. Radarantenne (10) für ein Füllstandmessgerät (100), aufweisend:
wenigstens eine Trägerplatte (14); und
wenigstens zwei auf der Trägerplatte (14) angeordnete Antennenelemente (12) zum Senden und/oder Empfangen eines Radarsignals;
wobei jedes der Antenennelemente (12) einen Hohlleiter (16) zum Leiten des Radarsignals aufweist;
wobei ein Innenvolumen (20) jedes Hohlleiters (16) zumindest teilweise mit einem Dielektrikum (22) gefüllt ist; und
wobei die Antennenelemente (12) in einem Abstand (18) zueinander angeordnet sind, welcher kleiner oder gleich einer Wellenlänge des Radarsignals ist.

2. Radarantenne (10) nach Anspruch 1,
wobei die Hohlleiter (16) der Antennenelemente (12) derart auf der Trägerplatte (14) ausgerichtet sind, dass die elektrischen Feldvektoren (28) der Grundmoden der Hohlleiter (16) parallel zueinander oder antiparallel zueinander ausgerichtet sind; und/oder
wobei die Antennenelemente (12) identische oder antiparallele Polarisationsrichtungen (28) aufweisen.

3. Radarantenne (10) nach einem der Ansprüche 1 oder 2,
wobei jedes der Antennenelemente (12) ein Strahlerelement (30) zum Einkoppeln des Radarsignals in den Hohlleiter (16) und/oder zum Auskoppeln des Radarsignals aus dem Hohlleiter (16) aufweist;
wobei jedes der Strahlerelemente (30) zumindest teilweise in dem Innenvolumen (20) und/oder angrenzend an ein erstes Ende (13a) des zugehörigen Hohlleiters (16) angeordnet ist; und
wobei die Strahlerelemente (30) derart ausgestaltet und zueinander ausgerichtet sind, dass die in die Hohlleiter (16) eingekoppelten Radarsignale zueinander parallele elektrische Feldvektoren (28) aufweisen.

4. Radarantenne (10) nach einem der voranstehenden Ansprüche,
wobei das Dielektrikum (22) eine relative Permittivität von wenigstens 1,5, insbesondere wenigstens 1,9, aufweist; und/oder
wobei das Dielektrikum (22) Teflon, einen Kunststoff und/oder Polyetheretherketon aufweist.

5. Radarantenne (10) nach einem der voranstehenden Ansprüche,
wobei die Hohlleiter (16) jeweils als Ausnehmungen und/oder Öffnungen (16) in der Trägerplatte (14) ausgebildet sind; oder
wobei die Hohlleiter (16) auf einer Außenfläche der Trägerplatte (14) angeordnet sind.

6. Radarantenne (10) nach einem der voranstehenden Ansprüche,
wobei jedes der Antennenelemente (12) eine Linse (26) aufweist, welche an einem antennenseitigen Ende (13b) des zugehörigen Hohlleiters (16) angeordnet ist.

7. Radarantenne (10) nach Anspruch 6,
wobei die Linsen (26) jeweils einstückig mit dem Dielektrikum (22) ausgebildet sind.

8. Radarantenne (10) nach einem der voranstehenden Ansprüche,
wobei jeder der Hohlleiter (16) an einem antennenseitigen Ende (13b) zur Vergrößerung einer Apertur der Antennenelemente (12) konisch ausgestaltet ist.

9. Radarantenne (10) nach einem der voranstehenden Ansprüche,
wobei die Antennenelemente (12) in einem Abstand (18) zueinander angeordnet sind, welcher kleiner oder gleich einer halben Wellenlänge des Radarsignals ist.

10. Radarantenne (10) nach einem der voranstehenden Ansprüche,
wobei jeder der Hohlleiter (16) einen runden, ovalen, elliptischen, rechteckigen, quadratischen oder polygonförmigen Querschnitt aufweist.

11. Radarantenne (10) nach einem der voranstehenden Ansprüche,
wobei jeder der Hohlleiter (16) einen runden Querschnitt aufweist;
wobei jedes der Antennenelemente (12) zum Senden und/oder Empfangen eines Radarsignals mit einer Frequenz von wenigstens 75 GHz ausgeführt ist; und
wobei jeder der Hohlleiter (16) einen Innendurchmesser (24) von weniger als 2,4 mm aufweist.

12. Radarantenne (10) nach einem der voranstehenden Ansprüche, weiter aufweisend:
wenigstens ein auf der Trägerplatte (14) angeordnetes Antennendummyelement (32) zur Beeinflussung einer Richtcharakteristik wenigstens eines der Antennenelemente (12);
wobei das Antennendummyelement (32) einen Dummyhohlleiter (16) aufweist, welcher mit einem Abschlusswellenwiderstand abgeschlossen ist, kurzgeschlossen ist oder offengelassen ist, so dass über das Antennendummyelement (32) kein Radarsignal emittiert werden kann.

13. Füllstandmessgerät (100) zur Bestimmung eines Füllstandes eines Mediums (108), aufweisend:
wenigstens eine Radarantenne (10) nach einem der voranstehenden Ansprüche.

14. Füllstandmessgerät (100) nach Anspruch 13,
wobei die Radarantenne (10) eine Mehrzahl von als Sendeelemente (12a) ausgebildeten Antennenelementen (12) zum Senden des Radarsignals aufweist, welche in einer ersten Reihe (17) auf der Trägerplatte (14) angeordnet sind; und
wobei die Radarantenne (10) eine Mehrzahl von als Empfangselemente (12b) ausgebildeten Antennenelementen (12) zum Empfangen eines reflektierten Signals aufweist, welche in einer zweiten Reihe (19) quer zur ersten Reihe auf der Trägerplatte (14) angeordnet sind.

15. Verfahren zur Herstellung einer Radarantenne (10), das Verfahren aufweisend:
Anordnen von wenigstens zwei Antennenelementen (12) zum Senden und/oder Empfangen eines Radarsignals auf einer Trägerplatte (14) der Radarantenne (10), wobei jedes der Antenennelemente (12) einen Hohlleiter (16) zum Leiten des Radarsignals aufweist; und
zumindest teilweises Befüllen eines Innenvolumens (20) jedes Hohlleiters (16) mit einem Dielektrikum (22);
wobei die Antennenelemente (12) in einem Abstand (18) zueinander angeordnet sind, welcher kleiner oder gleich einer Wellenlänge des Radarsignals ist.
